Europäisches Patentamt

European Patent Office

Office européen des brevets

(19)

(11) Veröffentlichungsnummer: **0 221 851 B1**

(12) **EUROPÄISCHE PATENTSCHRIFT**

(45) Veröffentlichungstag der Patentschrift: 27.12.91

(21) Anmeldenummer: 86810485.2

(22) Anmeldetag: 29.10.86

(51) Int. Cl.5: **B29C 45/14**, A44B 17/00, F16G 1/28

(54) Verfahren und Vorrichtung zur Herstellung eines flexiblen Gliederbandes.

(30) Priorität: 06.11.85 CH 4767/85
23.09.86 CH 3813/86

(43) Veröffentlichungstag der Anmeldung:
13.05.87 Patentblatt 87/20

(45) Bekanntmachung des Hinweises auf die
Patenterteilung:
27.12.91 Patentblatt 91/52

(84) Benannte Vertragsstaaten:
**AT BE DE ES FR GB GR IT LU NL SE**

(56) Entgegenhaltungen:
WO-A-83/01182          DE-A- 3 346 615
DE-B- 1 629 542        GB-A- 995 743
LU-A- 43 903           US-A- 2 291 545
US-A- 2 415 961

(73) Patentinhaber: **EGO KUNSTSTOFFWERK AG**
**Schöntalstrasse 2**
**CH-9450 Altstätten/SG(CH)**

(72) Erfinder: **Liebl, Rudolf**
**Heidenerstrasse 36a**
**CH-9450 Altstätten(CH)**
Erfinder: **Bosshard, Ernst**
**Waldistrasse 36**
**CH-8134 Adliswil(CH)**

(74) Vertreter: **Bosshard, Ernst**
**Schulhausstrasse 12**
**CH-8002 Zürich(CH)**

EP 0 221 851 B1

**Beschreibung**

Die Erfindung bezieht sich auf ein Verfahren zur Herstellung eines flexiblen Gliederbandes, wobei durch die zwischen den Gewebefäden bestehenden Zwischenräume eines gewobenen Bandes eine Kunststoffmasse unter Druck hindurchgespritzt wird zur Bildung von in Längsrichtung des Bandes voneinander distanzierten Gliederteilen auf der einen Bandseite und mit diesen über das Band zusammenhängenden Gegenstücken auf der anderen Bandseite.

Ferner bezieht sich die Erfindung auf eine Vorrichtung zur Durchführung des Verfahrens mit einer ersten Formplatte mit mindestens einer Kunststoff-Spritzdüse auf der einen Seite eines Bandes, wobei die Formplatte eine durch das Band begrenzte erste Ausnehmung zur Bildung eines Gegenstükkes aufweist, die Spritzdüse im Zentrum der ersten Ausnehmung angeordnet ist und auf der anderen Bandseite eine zweite Formplatte mit einer der ersten Ausnehmung gegenüberliegenden zweiten Ausnehmung zur Bildung eines Gliederteiles gegen das Band anliegt, wobei das Band für den Durchtritt der Kunststoffspritzmasse zwischen den Gewebefäden Zwischenräume aufweist. Ferner bezieht sich die Erfindung auf nach dem Verfahren hergestellte Gliederbänder, wobei im Abstand voneinander angeordnete, aus Kunststoff bestehende Gliederteile durch das Gewebe des Bandes hindurch je mit aus Kunststoff bestehenden Gegenstücken permanent verbunden sind.

Bei dichtem Gewebe und Kunststoff-Gliederteilen, die nicht nur eine minimale Grösse haben, sondern eine praktisch für Druckknöpfe, Zähne eines Zahnrades od.dgl. geeignete Abmessung haben, besteht die Schwierigkeit darin, dass auf der Einspritzseite ein hoher Pressdruck erforderlich ist, damit der flüssige, heisse Kunststoff die sehr engen Gewebeöffnungen des Bandes überhaupt zu durchdringen vermag. Da anderseits auf der der Einspritzdüse gegenüberliegenden Seite des Bandes ein Hohlraum vorhanden sein muss, besteht die Gefahr, dass sich das Gewebe unter dem hohen erforderlichen Pressdruck des flüssigen Kunststoffes verzieht oder sogar reisst.

Aus der US-A-2291545 ist eine Gewebematte bekannt, bei der, beispielsweise für ornamentale Zwecke, das Gewebe durchdringende, kleine, warzenartige Kunststoffkörperchen aufgespritzt werden. Diese sind untereinander durch Stege verbunden. Für grössere Gebilde ist indessen eine Perforierung vorgesehen. Für dichte Gewebe und einzelne, grössere, untereinander nicht durch Verbindungsstege zusammenhängende Gliederteile ist diese Herstellungsart nicht geeignet.

Die WO-A-8301182 zeigt einen aus Kunststoff hergestellten Verschluss, bei dem eine Perforierung (Spalte 9, Z. 24) des Bandes vorgenommen wird. Dadurch wird das Band geschwächt und die Haftung der Verschlussteile am Band vermindert.

Aus der LU-A-43903 geht ein Verfahren zur Verstärkung eines für flüssigen Kunststoff durchlässigen Bandes hervor, bei dem das Band unter dem Pressdruck verformt wird. Dieses Verfahren eignet sich nur zum Anspritzen kleiner Kunststoff-Artikel oder für grobmaschiges Gewebe, da sonst das Band unzulässig verzogen wird oder die Gewebefäden sogar reissen.

Die US-A-2415961 zeigt ein Spritzgusswerkzeug zur Herstellung ornamentaler Verzierungen auf einem porösen Basiskörper. Da der Basiskörper unter dem Pressdruck ausgebaucht wird (Spalte 6, Z. 29), eignet sich dieses Spritzwerkzeug nur zur Herstellung relativ kleiner Kunststoff-Verzierungen.

Die mit der Erfindung zu lösende Aufgabe besteht darin, ein Verfahren zur Herstellung eines flexiblen Gliederbandes, eine Vorrichtung zur Durchführung des Verfahrens und nach dem Verfahren hergestellte Gliederbänder zu schaffen, wobei die aus Kunststoff bestehenden Gliederteile so auf ein dicht gewobenes Band aufgespritzt werden können, dass der das Band durchdringende Kunststoff das Band unter dem Pressdruck nicht ausbaucht oder beschädigt.

Diese Aufgabe wird durch das erfindungsgemässe Verfahren dadurch gelöst, dass das Band auf der der Einspritzstelle gegenüberliegenden Bandseite zur Aufnahme des Pressdruckes abgestützt wird.

Die erfindungsgemässe Vorrichtung zur Durchführung des Verfahrens ist dadurch gekennzeichnet, dass ein gegen das Band anliegender oder annähernd anliegender, der Spritzdüse gegenüberliegender, quer zum Band beweglicher Kern vorhanden ist.

Ein nach dem Verfahren hergestelltes Gliederband ist dadurch gekennzeichnet, dass die Gliederteile auf der einen Bandseite Druckknopfteile sind, mit einer Einschnürung und mit einer zentralen, kegelstumpfförmigen Oeffnung, und auf der anderen Bandseite ein flaches, scheibenartiges, gegenüber dem Druckknopfteil durchmessergrösseres Gegenstück vorhanden ist.

Ein weiteres nach dem Verfahren hergestelltes Gliederband ist dadurch gekennzeichnet, dass die Gliederteile auf der einen Bandseite Zähne sind, mit einer im Zahn vorhandenen mittigen Ausnehmung und auf der anderen Bandseite ein flaches, gegenüber dem Zahn grösseres Gegenstück vorhanden ist, wobei das Band endlos ausgebildet ist.

Dadurch gelingt es, eine unlösbare, auch zur Kraftübertragung geeignete Verbindung zwischen dem flexiblen Band und den Gliedern zu schaffen, ohne dass das Band an den Befestigungsstellen der Glieder geschwächt wird oder dass es an diesen Stellen im Betrieb zum Ausfransen neigt.

Bei der Spritz-Vorrichtung bewirkt der das Band stützende Kern einen dem Spritzdruck entgegenwirkenden Gegendruck, so dass das Band unter dem zum Durchdringen des flüssigen Kunststoff durch das Gewebe erforderlichen relativ hohen Spritzdruck nicht ausbauchen kann.

In der Zeichnung sind Ausführungsbeispiele des Erfindungsgegenstandes dargestellt. Es zeigen:

Fig. 1    einen Schnitt durch das Spritzwerkzeug in einer ersten Spritzphase zur Herstellung eines Druckknopfteile tragenden flexiblen Bandes,

Fig. 2    einen Schnitt durch das Spritzwerkzeug gemäss Fig.1 in einer zweiten Spritzphase

Fig. 3    einen Schnitt durch das Spritzwerkzeug gemäss den Fig. 1 und 2 in einer dritten Spritzphase,

Fig. 4    einen Schnitt durch ein Spritzwerkzeug in der geschlossenen Stellung zur Herstellung eines mit Zähnen versehenen Bandes,

Fig. 5    eine Draufsicht auf ein mit runden Zähnen versehenes Band,

Fig. 6    eine Seitenansicht des mit Zähnen versehenen Bandes gemäss Fig. 5,

Fig. 7    ein um ein Ritzel geschlungenes, mit Zähnen versehenes Band,

Fig. 8    ein um zwei Ritzel unterschiedlicher Drehrichtung geschlungenes Band mit Zähnen, die abwechslungsweise auf beiden Seiten des Bandes angeordnet sind,

Fig. 9    eine perspektivische Ansicht eines Bandes mit unterschiedlichen Zahnformen.

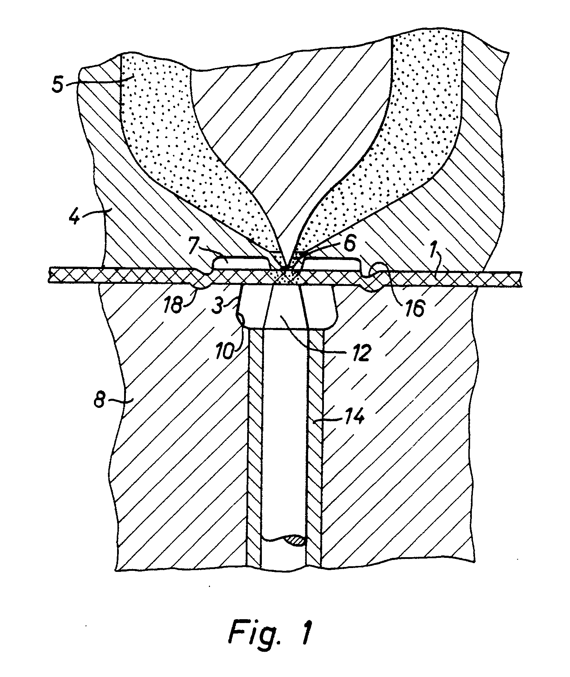

Das Kunststoff-Spritzwerkzeug gemäss den Fig. 1 - 3 dient zur Herstellung von Druckknopfteilen 20, die an einem flexiblen Band 1 hängen. Das nicht näher dargestellte Gegenstück des Druckknopfes ist von an sich bekannter, konventioneller Bauart und rastet hinter dem eingeschnürten, konischen Teil 3 des Druckknopfteiles ein.

Eine erste obere Formplatte 4 des Spritzwerkzeuges ist mit Spritzmaterial-Zufuhrkanälen 5 für den Kunststoff versehen, die je in eine zentrale Spritzdüse 6 ausmünden. Um jede Spritzdüse 6 herum enthält die obere Formplatte 4 eine flache, ringförmige Ausnehmung 7. Die Spritzdüse 6 liegt direkt gegen das Band 1 an, oder hat zu diesem nur einen geringen Abstand. Auf der gegenüberliegenden Seite des Bandes 1 befindet sich eine zweite, untere Formplatte 8 des Spritzwerkzeuges, die auf der Unterseite gegen das Band 1 anliegt. In dieser unteren Formplatte 8 befinden sich ringförmige konische Ausnehmungen 10, welche die Form des zu spritzenden Druckknopfteiles bestimmen und die sich in Richtung gegen das Band 1 hin leicht verengen. Jede dieser scheibenartigen Ausnehmungen 7 in der obern Formplatte 4 und die sich gegenüberliegenden konischen Ausnehmungen 10 in der untern Formplatte 8 verlaufen zueinander koaxial. Zur scharfen Begrenzung des Randes der Ausnehmung 7 ist im obern Formteil 4 eine die Ausnehmung 7 aussen umgebende, vorstehende Ringrippe 16 und im darunter liegenden Bereich des untern Formteiles 8 eine Sicke 18 vorhanden. Die konische Ausnehmung 10 wird in ihrer Mitte von einem kegelstumpfförmigen, in Axialrichtung beweglichen Kern 12 durchdrungen, der gegen das Band 1 anliegt. Der untere Teil des Kernes 12 ist zylindrisch ausgebildet und wird von einem, rohrförmigen Auswerfer 14 umgeben. Der Auswerfer 14 verläuft bündig zur Unterkante der Ausnehmung 10.

Das Band ist dicht gewoben und enthält in üblicher Weise Kett- und Schussfäden. Trotz der dichten Gewebeart verbleiben im Band 1 geringe, von Auge kaum sichtbare Zwischenräume zwischen den Kett- und Schussfäden, durch die das aus der Spritzdüse 6 mit hohem Druck ausgepresste, flüssige, heisse Kunststoffmaterial das Gewebe durchdringt.

In einer ersten, in Fig. 1 dargestellten Spritzphase dringt der aus der Spritzdüse 6 austretende Kunststoff durch das Band, wobei die Spritzdüse 6 praktisch gegen das Band 1 anliegt. Da auf der der Spritzdüse 6 gegenüberliegenden Seite des Bandes 1 die Stirnfläche des bolzenförmigen Kernes 12 satt gegen das Band 1 anliegt, ist das eingespritzte Material gezwungen seitlich auszuweichen.

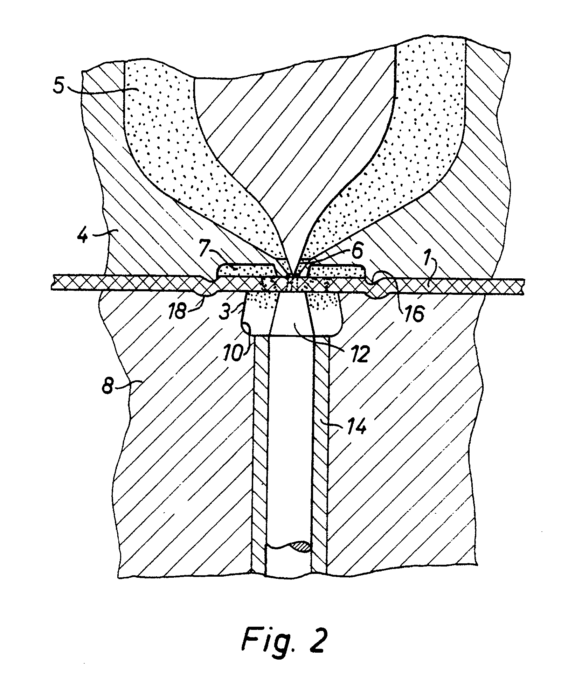

In der in Fig. 2 dargestellten, unmittelbar anschliessenden Spritzphase wird die scheibenartige Ausnehmung 10 mit Kunststoff gefüllt.

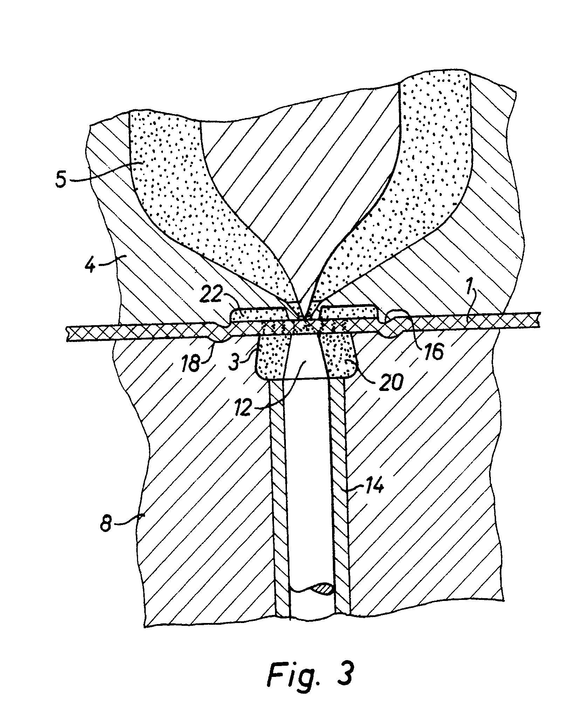

In der direkt anschliessenden Spritzphase gemäss Fig. 3 wird schliesslich die konische Ausnehmung 10 durch das das Band 1 durchdringende Kunststoffmaterial vollständig gefüllt. Hernach hängen der Druckknopfteil 20 über das Band 1 mit dem scheibenförmigen Gegenstück 22 unlösbar zusammen. Hernach wird die Spritzform geöffnet, der Kern 12 zurückgezogen und der in der Ausnehmung 10 gebildete Druckknopfteil 20 durch den Auswerfer 14 ausgestossen. Infolge der elastischen Eigenschaft des Kunststoffes federt er nach dem Durchgang des Einschnürungsbereiches in der Formplatte 8 wieder zurück.

In vorbestimmten Abständen werden sodann entlang des Bandes 1 in der beschriebenen Weise Druckknopfteile angespritzt.

Für eine rationelle Herstellung wird das Spritzwerkzeug so ausgebildet, dass mehrere Bänder 1, beispielsweise vier, parallel nebeneinander liegend angeordnet werden und auf jedes dieser Bänder gleichzeitig mehrere, beispielsweise sechs Druckknopfteile aufgespritzt und hernach die Bänder für eine nächste Serie nachgezogen werden.

Derartige mit Druckknopfteilen versehene Bänder lassen sich vorzugsweise am obern Rand von Vorhängen annähen. Die Gegenstücke des Druckknopfes befinden sich dann an den in Gleitschienen eingreifenden Vorhanggleitern. Durch die Flexibilität des Bandes I wird die Faltenbildung des Vorhanges nicht behindert. Ein derartiges mit metallfreien Druckknopfteilen versehenes Band I hat den Vorteil, dass beim Waschen keine metallische Reibung und Abnützung an der Waschtrommel und keine Zerstörung der Oberflächenbeschichtung der Druckknopfteile erfolgt.

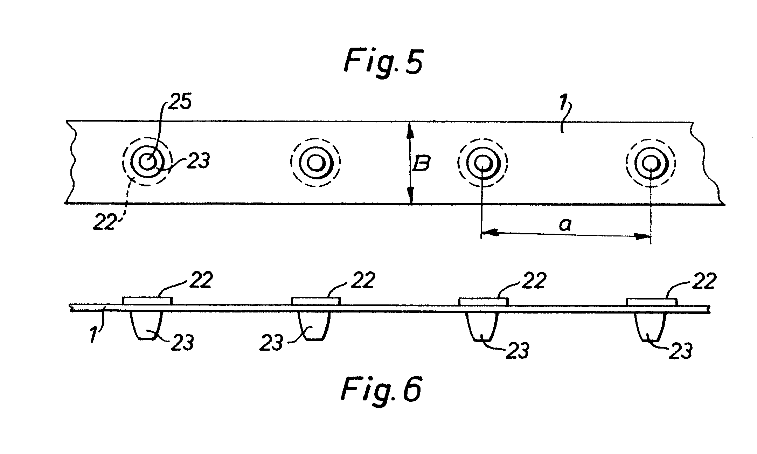

Das Kunststoff-Spritzwerkzeug gemäss Fig. 4 ist zur Herstellung und Befestigung von Zähnen an einem flexiblen Band bestimmt und hat den gleichen technischen Aufbau wie er in den Fig. I - 3 beschrieben wurde. Lediglich die Ausnehmung 24 hat eine Zahnform statt die Form eines Druckknopfteiles.

Auch hier ist das Band I dicht gewoben und enthält in üblicher Weise Kett- und Schussfäden. Trotz der dichten Gewebeart verbleiben im Band I geringe, von Auge kaum sichtbare Zwischenräume zwischen den Kett- und Schussfäden, durch die das aus der Spritzdüse 6 mit hohem Druck ausgepresste, flüssige, heisse Kunststoffmaterial das Gewebe des Bandes I durchdringt. Das Band I ist somit an den Verbindungsstellen der Zähne nicht gelocht.

Das scheibenförmige Gegenstück 22 und der Zahn 23 hängen über das Band I unlösbar zusammen. Nach dem Spritzvorgang wird die Spritzform geöffnet, der Kern I2 zurückgezogen und der in der Ausnehmung 24 gebildete Zahn 23 durch den Auswerfer I4 ausgestossen. Je nach der Zahnform kann allenfalls auf einen mechanischen Auswerfer verzichtet werden oder das Auswerfen kann durch Druckluft erfolgen.

Als Material sowohl für die Druckknopfteile als auch für die Zähne 23 und die Gegenstücke 22 wird ein thermoplastischer Kunststoff, beispielsweise Polyamid (Nylon 6), Azetalharz (copolymer oder homopolymer), Polyaethylen, Polyester gewählt.

Auch die Kett- und Schussfäden des Bandes I bestehen vorzugsweise aus dem gleichen oder artverwandten thermoplastischen, schweissbaren Kunststoffmaterial, nämlich aus einem Polyester, Polyamid, Polypropylen oder Polyaethylen. Dadurch verbindet sich das Material des Druckknopfteiles oder des Zahnes 23 sowohl mit dem Gegenstück 22 als auch mit dem Band I an den ganzen anliegenden Flächen. Damit das Gegenstück 22 die Rundung eines Ritzels leicht annehmen kann, ist es so dünn ausgeführt, dass eine ausreichende Flexibilität gegeben ist.

Der Spritzdruck im Spritzwerkzeug beträgt etwa 300 - 800 bar, je nach dem verwendeten Kunststoff.

Bei der Verwendung von Polyester liegt er eher im untern Bereich, bei Azetalharz eher im obern Bereich.

Für eine rationelle Fertigung werden pro Spritzvorgang mehrere, beispielsweise vier bis sechs, in vorbestimmten Teilungs-Abständen entlang des Bandes I Zähne 23 und jeweils gegenüberliegende Gegenstücke 22 angespritzt.

Darüber hinaus wird das Spritzwerkzeug vorzugsweise so ausgebildet, dass mehrere, beispielsweise vier Bänder parallel nebeneinander liegend angeordnet werden und jedem dieser Bänder mehrere Spritzdüsen 6 zugeordnet werden, mit denen somit gleichzeitig eine Mehrzahl von Zähnen auf eine Mehrzahl von Bändern gespritzt werden können. Nach dem Spritzvorgang werden die Bänder um ein vorbestimmtes Mass gemeinsam nachgezogen zum Spritzen einer nächsten Serie mit gleichem Teilungsabstand.

Aus den Fig. 5 und 6 geht eine Ausführungsform eines solchen mit Zähnen 23 versehenen Bandes I hervor. Die Zähne sind rund und haben im Querschnitt Evolventenform. Gegenüber konventionellen Zahnriemen haben die Zähne am Band einen grössern gegenseitigen Abstand, d.h. der Teilungsabstand a ist wesentlich grösser als der Durchmesser der Zähne, mindestens das 3-fache. Der Teilungsabstand a ist auch grösser als die Breite B des Bandes. Ein derartiges Transportband kann auf der den Zähnen gegenüberliegenden Seiten des Bandes I mit beliebig gestalteten Mitnehmern od. dgl. versehen werden.

Die Ritzel haben normalerweise nur wenige, dem Teilungsabstand a entsprechende Zahnlücken 35. Sie könnten jedoch auch als normale Zahnräder mit voller Zähnezahl ausgebildet sein. Dabei muss jedoch in Kauf genommen werden, dass die Kraftübertragung durch das Band I infolge der grössern Zahl von Zahnlücken und damit geringerer Haftreibung etwas kleiner ist.

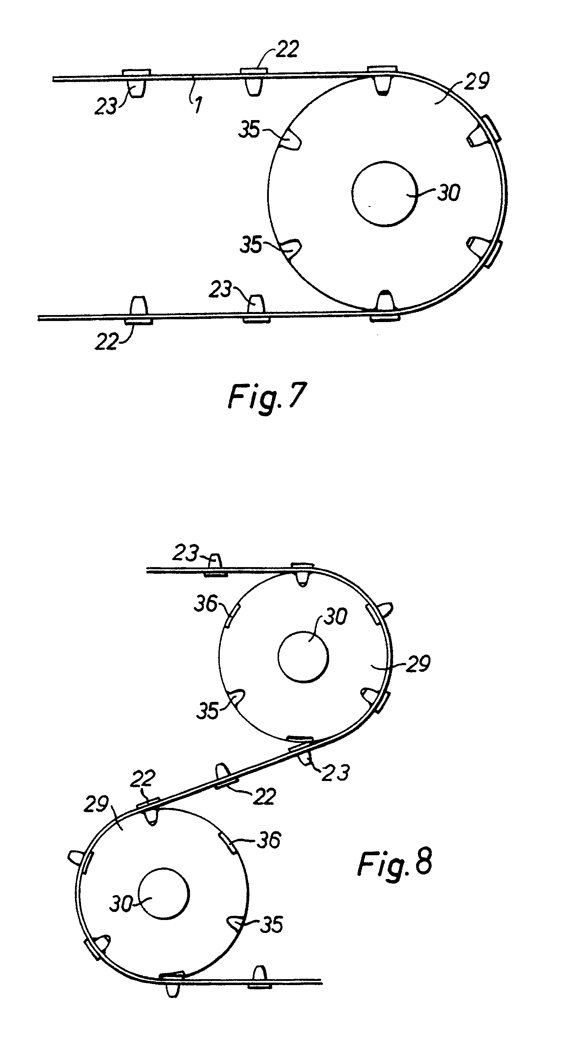

In Fig. 7 ist ein derartiges mit Zähnen 23 versehenes Band I zusammen mit einem Ritzel 29 dargestellt, das auf einer Welle 30 sitzt. Am Ritzelumfang befinden sich Ausnehmungen 35 in Form von Zahnlücken die mit der Teilung a der Zähne 23 am Band I übereinstimmen. Die Teilung am Ritzel kann zusammen mit dem Band I beliebig gewählt werden, wobei darauf zu achten ist, dass beim vorgesehenen Umschlingungwinkel des Bandes I stets mindestens ein Zahn im Eingriff mit dem Ritzel 29 ist.

Bei der Ausführungsform nach Fig. 8 ragen die Zähne abwechslungsweise nach der einen und nach der andern Seite des Bandes I, so dass gegenläufig Ritzel 29 synchron angetrieben werden können. Zur Aufnahme der Gegenstücke 22 sind in den Ritzeln Ausnehmungen 36 vorhanden, die auch etwas grösser ausgebildet sein können als die Gegenstücke 22, falls sie an der Kraftübertragung nicht teilnehmen sollen.

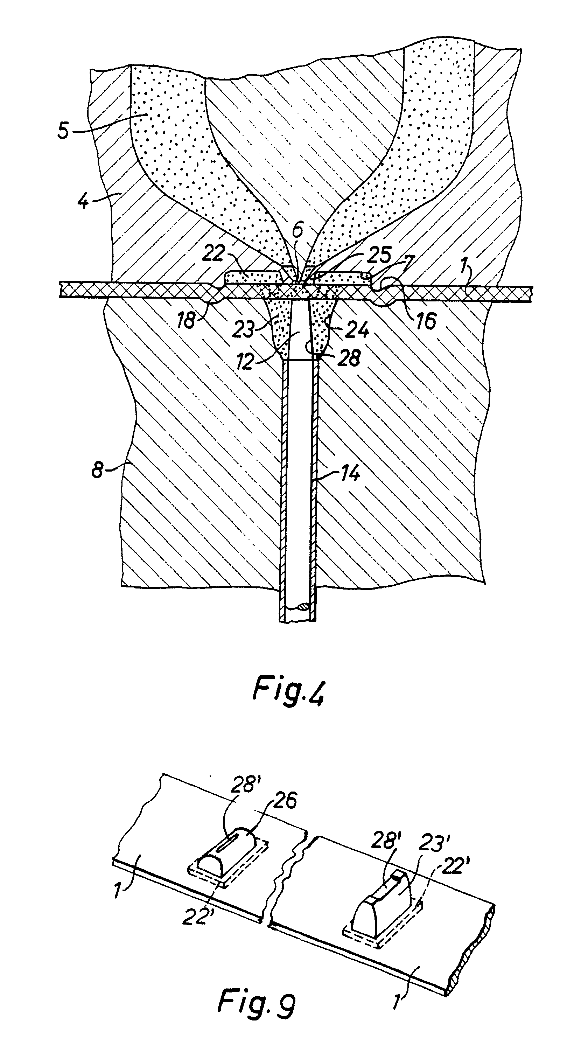

Aus Fig. 9 gehen unterschiedliche Zahnformen hervor. Der Zahn 23' ist länglich ausgebildet, hat eine Evolventenform und ist mit einem rechteckigen Gegenstück 22' auf der andern Bandseite verbunden. Der Kern hat hier eine rechteckige Querschnittsform und hinterlässt am Zahnkopf 23' eine längliche Oeffnung 28', die vorzugsweise kürzer ist als die Zahnlänge.

Der auf der linken Seite in Fig. 9 dargestellte Zahn 26 ist länglich und hat im Querschnitt die Form eines Halbkreises. Dieser Zahn 26 hängt auf der andern Seite des Bandes I ebenfalls mit einem rechteckigen Gegenstück 22' zusammen. Der längliche, quer zur Bandlängsrichtung verlaufende Schlitz 28' wird durch den bei der Entformung entfernten länglichen Kern gebildet und ist kürzer als die sich quer zur Bandlängsrichtung erstreckende Zahnlänge.

Das solchen halbrunden Zähnen zugeordnete Rad kann hier die Form eines Kettenrades haben, welches gegenüber Norm-Ausführungen in dem Sinne modifiziert ist, dass die Spitzen gekürzt sind. Ein solches Kettenrad kann seitlich vorstehende Begrenzungsränder haben, um ein Ablaufen des Bandes I zu verhindern.

Auch die Zähne 23 der Ausführungsform nach den Fig. 5 und 6 könnten im Querschnitt halbkreisförmig bzw. etwa als Halbkugeln ausgebildet sein.

Das Gegenstück 22, 22' könnte auch eine andere Form haben, beispielsweise oval oder sechseckig.

Das gewobene Band I könnte für bestimmte Anwendungsfälle auch aus Hanf oder Baumwolle bestehen.

Zur Bildung eines endlosen Bandes werden dessen Enden miteinander verschweisst oder durch konventionelle Verbindungsklemmen verbunden.

**Patentansprüche**

1. Verfahren zur Herstellung eines flexiblen Gliederbandes, wobei durch die zwischen den Gewebefäden bestehenden Zwischenräume eines gewobenen Bandes (1) eine Kunststoffmasse unter Druck hindurchgespritzt wird zur Bildung von in Längsrichtung des Bandes (1) voneinander distanzierten Gliederteilen (20,23), auf der einen Bandseite und mit diesen über das Band (1) zusammenhängenden Gegenstücken (22) auf der andern Bandseite, dadurch gekennzeichnet, dass das Band (1) auf der der Einspritzstelle (6) gegenüberliegenden Bandseite zur Aufnahme des Pressdruckes abgestützt wird.

2. Verfahren nach Anspruch 1, dadurch gekennzeichnet, dass gleichzeitig auf mehreren parallel nebeneinander angeordneten Bändern (1) mehrere in Bandlängsrichtung im Abstand voneinander angeordnete Gliederteile (20,23) und Gegenstücke (22) auf jedes Band (1) aufgespritzt werden.

3. Vorrichtung zur Durchführung des Verfahrens nach Anspruch 1 oder 2, mit einer ersten Formplatte (4) mit mindestens einer Kunststoff-Spritzdüse (6) auf der einen Seite eines Bandes (1) wobei die Formplatte (4) eine durch das Band (1) begrenzte erste Ausnehmung (7) zur Bildung eines Gegenstückes (22) aufweist, die Spritzdüse (6) im Zentrum der ersten Ausnehmung (7) angeordnet ist und auf der andern Bandseite eine zweite Formplatte (8) mit einer der ersten Ausnehmung (7) gegenüberliegenden zweiten Ausnehmung (10,24) zur Bildung eines Gliederteiles (20,23) gegen das Band (1) anliegt, wobei das Band (1) für den Durchtritt der Kunststoffspritzmasse zwischen den Gewebefäden Zwischenräume aufweist, dadurch gekennnzeichnet, dass ein gegen das Band (1) anliegender oder annähernd anliegender der Spritzdüse (6) gegenüberliegender, quer zum Band (1) beweglicher Kern (12) vorhanden ist.

4. Vorrichtung nach Anspruch 3, dadurch gekennzeichnet, dass der Kern (12) von einem rohrförmigen Auswerfer (14) umgeben ist.

5. Vorrichtung nach den Ansprüchen 3 oder 4, dadurch gekennzeichnet, dass pro Band (1) mehrere im Teilungsabstand der Gliederteile (20,23) angeordnete Spritzdüsen (6) mit ersten und zweiten Ausnehmungen (7,10,24) pro Band (1) und mehrere nebeneinander angeordnete Bänder (1) vorhanden sind.

6. Gliederband, hergestellt nach dem Verfahren nach Anspruch 1 oder 2, wobei im Abstand voneinander angeordnete, aus Kunststoff bestehende Gliederteile (20) durch das Gewebe des Bandes (1) hindurch je mit aus Kunststoff bestehenden Gegenstücken (22) permanent verbunden sind, dadurch gekennzeichnet, dass die Gliederteile auf der einen Bandseite Druckknopfteile (20) sind, mit einer Einschnürung und mit einer zentralen kegelstumpfförmigen Oeffnung, und auf der andern Bandseite ein flaches, scheibenartiges, gegenüber dem Druckknopfteil (20) durchmessergrösseres Gegenstück (22) vorhanden ist.

7. Gliederband, hergestellt nach dem Verfahren nach Anspruch 1 oder 2, wobei im Abstand voneinander angeordnete, aus Kunststoff bestehende Gliederteile (23) durch das Gewebe des Bandes (1) hindurch je mit aus Kunststoff bestehenden Gegenstücken (22) permanent verbunden sind, dadurch gekennzeichnet, dass die Gliederteile auf der einen Bandseite Zähne (23) sind, mit einer im Zahn vorhandenen mittigen Ausnehmung (25,28) und auf der andern Bandseite ein flaches, gegenüber dem Zahn (23) grösseres Gegenstück (22) vorhanden ist, wobei das Band (1) endlos ausgebildet ist.

## Claims

1. Method for making a flexible jointed band, a synthetic material being injected under pressure through the gaps in a woven band (1) existing between the fabric threads, for the formation of joint members (20, 23) spaced apart in the longitudinal direction of the band (1), on one side of the band and with counter-members (22) connected across the band (1), on the other side of the band, characterised in that on the side of the band opposite the injection point (6), the band (1) is supported for receiving the pressure applied.

2. Method according to Claim 1, characterised in that at the same time on a plurality of bands (1) arranged in parallel one beside the other, a plurality of joint members (20, 23) and counter-members (22) arranged at a distance apart in the longitudinal direction of the band are injected onto each bond (1).

3. Apparatus for carrying out the method according to Claim 1 or 2, with a first mould plate (4) with at least one synthetic material injection nozzle (6) on one side of a band (1), the mould plate (4) comprising a first recess (7) defined by the band (1), for the formation of a counter-member (22), the injection nozzle (6) being located in the centre of the first recess (7) and on the other side of the band a second mould plate (8) with a second recess (10, 24) lying opposite the first recess (7), for forming a joint member (20, 23), bearing against the band (1), the band (1) comprising gaps between the fabric threads for the passage of the synthetic material to be injected, characterised in that a core (12) bearing against or approximately bearing against the band (1), lying opposite the injection nozzle (6) and able to move transversely to the band (1) is provided.

4. Apparatus according to Claim 3, characterised in that the core (12) is surrounded by a tubular ejector (14).

5. Apparatus according to Claims 3 or 4, characterised in that per band (1), a plurality of injection nozzles (6) arranged at the spacing of the joint members (20, 23), with first and second recesses (7, 10, 24) per band (1) and a plurality of bands (1) arranged one beside the other are provided.

6. Jointed band, made by the method according to Claim 1 or 2, joint members (20) consisting of synthetic material, arranged at a distance apart, being permanently connected through the fabric of the band (1) respectively to counter-members (22) consisting of synthetic material, characterised in that the joint members on the one side of the band are press fastener members (20) with a constriction and with a central frustoconical opening and provided on the other side of the band is a flat, disc-shaped counter-member (22) of larger diameter than the press fastener member (20).

7. Jointed band, made by the method according to Claim 1 or 2, joint members (23) consisting of synthetic material and arranged at a distance apart being permanently connected through the fabric of the bond (1) respectively to counter-members (22) consisting of synthetic material, characterised in that the joint members on one side of the band are teeth (23), with a central recess (25, 28) present in the tooth and on the other side of the band a flat counter-member (22) is provided, which is larger in comparison with the tooth (23), the band (1) being constructed to be continuous.

## Revendications

1. Procédé de fabrication d'une bande porte-pièces souple, qui consiste à injecter sous pression dans les interstices, existant entre les fils du tissu, d'une bande tissée (1), une masse de matière plastique en vue de former, sur l'un des côtés de la bande (1) des éléments de pièces (20,23) à distance les uns des autres dans la direction longitudinale de la bande (1) et, sur l'autre côté de la bande, des éléments de pièces antagonistes (22) d'un seul tenant avec ceux-ci à travers la bande (1), caractérisé en ce qu'il consiste, pour absorber la pression d'injection, à soutenir la bande (1) sur son côté qui est opposé au point d'injection (6).

2. Procédé suivant la revendication 1, caractérisé en ce qu'il consiste à injecter simultanément, sur plusieurs bandes (1) disposées parallèlement les unes à côté des autres, plusieurs éléments de pièces (20, 23) et éléments de pièces antagonistes (22) sur chaque bande (1), disposés à distance les uns des autres.

3. Dispositif pour la mise en oeuvre du procédé suivant la revendication 1 ou 2, comprenant une première plaque de moulage (4) à au moins une buse d'injection (6) de matière plastique sur l'un des côtés d'une bande (1), la plaque de moulage (4) comportant une première cavité (7) délimitée par la bande (1) et destinée à former un élément de pièce antagoniste (22), la buse d'injection (6) étant disposée au centre de la première cavité (7), et, de l'autre côté de la bande, une seconde plaque de moulage (8), ayant une seconde cavité (10, 24) opposée à la première cavité (7) et destinée à former un élément de pièce (20, 23), s'appliquant sur la bande (1), celle-ci (1) comportant, pour le passage de la masse de matière plastique à injecter, des interstices entre les fils du tissu, caractérisé en ce qu'il est prévu un noyau (12) s'appliquant ou s'appliquant sensiblement contre la bande (1), en face de la buse d'injection (6) et mobile transversalement par rapport à la bande (1).

4. Dispositif suivant la revendication 3, caractérisée en ce que le noyau (12) est entouré d'un éjecteur tubulaire (14).

5. Dispositif suivant la revendication 3 ou 4, caractérisé en ce qu'il est prévu, pour chaque bande (1), plusieurs buses d'injection (6) disposées à une distance qui correspond à l'intervalle séparant les éléments de pièces (20, 23) et ayant des première et seconde cavités (7, 10, 24) par bande (1) et plusieurs bandes (1) disposées côte à côte.

6. Bande porte-pièces, fabriquée par le procédé suivant la revendication 1 ou 2, des éléments de pièces (20) en matière plastique et à distance les uns des autres étant reliés en permanence respectivement à des éléments de pièces antagonistes (22) en matière plastique à travers le tissu de la bande (1), caractérisée en ce que les éléments de pièces situés sur un côté de ta bande, sont des éléments de boutons-poussoirs (20) présentant un rétrécissement et une ouverture centrale tronconique, et, que de l'autre côté de la bande, il est prévu un élément de pièce antagoniste (22) plat, en forme de disque et de plus grand diamètre que l'élément de bouton-poussoir (20).

7. Bande porte-pièce, fabriquée par le procédé suivant la revendication 1 ou 2, des éléments de pièces (20) en matière plastique et à distance les uns des autres étant reliés en permanence respectivement à des éléments de pièces antagonistes (22) en matière plastique à travers le tissu de la bande (1), caractérisée en ce que les éléments de pièces sont, d'un côté de la bande, des dents (23) présentant un évidement (25, 28) au milieu de la dent et, que de l'autre côté de la bande, il est prévu une élément de pièce antagoniste (22) plat et plus grande que la dent (23), la bande (1) étant une bande sans fin.

**Fig. 1**

Fig. 2

Fig. 3

Fig. 5

Fig. 6

EP 0 221 851 B1

Fig. 7

Fig. 8

**Fig.4**

**Fig. 9**